Europäisches Patentamt

European Patent Office

Office européen des brevets

(11) Publication number: **0 188 624**
**B1**

(12) **EUROPEAN PATENT SPECIFICATION**

(45) Date of publication of patent specification: **08.03.89**

(21) Application number: **85903393.8**

(22) Date of filing: **11.07.85**

(86) International application number:
**PCT/JP85/00391**

(87) International publication number:
**WO 86/00742 30.01.86 Gazette 86/03**

(51) Int. Cl.⁴: **G 11 B 7/09**

(54) **APPARATUS FOR DETECTING TRACKING ERROR OF OPTICAL HEAD.**

(30) Priority: **13.07.84 JP 145768/84**

(43) Date of publication of application:
**30.07.86 Bulletin 86/31**

(45) Publication of the grant of the patent:
**08.03.89 Bulletin 89/10**

(84) Designated Contracting States:
**AT DE FR GB IT NL**

(56) References cited:
**FR-A-2 313 732**
**FR-A-2 533 732**
**JP-A-58 014 332**
**US-A-4 180 822**

**PATENTS ABSTRACTS OF JAPAN, vol. 8, no. 60 (P-262)1497r, 22nd March 1984; & JP-A-58 208 939**

(73) Proprietor: **SONY CORPORATION**
**7-35 Kitashinagawa 6-Chome Shinagawa-ku Tokyo 141 (JP)**

(72) Inventor: **FUKUMOTO, Atsushi Sony Corporation**
**7-35, Kitashinagawa 6-chome Shinagawa-ku Tokyo 141 (JP)**
Inventor: **OHSATO, Kiyoshi Sony Corporation**
**7-35, Kitashinagawa 6-chome Shinagawa-ku Tokyo 141 (JP)**
Inventor: **OKA, Michio Sony Corporation**
**7-35, Kitashinagawa 6-chome Shinagawa-ku Tokyo 141 (JP)**

(74) Representative: **Thomas, Christopher Hugo et al**
**D Young & Co 10 Staple Inn London WC1V 7RD (GB)**

EP 0 188 624 B1

Courier Press, Leamington Spa, England.

**Description**

This invention relates to optical head tracking error detecting apparatus.

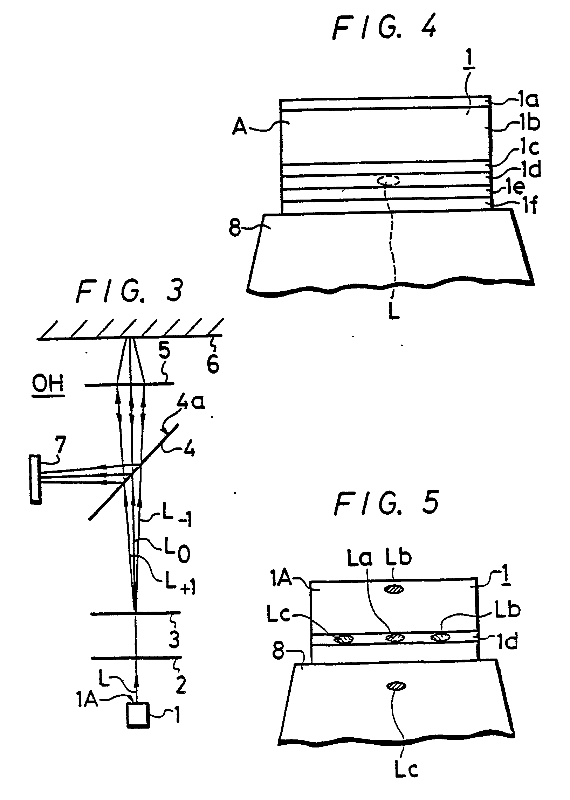

A known optical head tracking error detecting apparatus is shown in Figure 3, and comprises an optical head OH and a semiconductor laser element (laser diode) 1. A diverging laser beam L having an elliptical cross-section emitted from a beam emission end face 1A of the laser element 1 enters a collimator lens (not always necessary) 2 which forms a parallel beam, and then enters a diffraction grating 3. An O-order beam $L_0$ and $\pm$ first-order beams $L_{+1}$ and $L_{-1}$ (beams of higher and lower orders will be neglected) pass through a non-polarizing beam splitter 4, such as a half mirror, and enter an objective lens 5 in which they are converged. (If a polarizing beam splitter is used, a one-quarter wavelength plate is provided between it and the objective lens 5). The converged beams $L_0$, $L_{+1}$ and $L_{-1}$ are incident on the recording surface of an optical (which may be a photo-magnetic) recording medium 6 with a predetermined spacing, for example, 10 μm.

The beams $L_0$, $L_{+1}$ and $L_{-1}$ reflected from the recording medium 6 pass through the lens 5 and are incident on the beam splitter 4. Parts of them are reflected on a reflection surface 4a of the beam splitter 4 and pass to a photodetector 7 formed of three photodetecting sections on which the beams $L_0$, $L_{+1}$ and $L_{-1}$ respectively are incident. When the difference between the photodetection outputs from the pair of photodetecting sections on which the beams $L_{+1}$ and $L_{-1}$ respectively are incident is calculated, it is possible to obtain a tracking error signal corresponding to the tracking state of the beam $L_0$ on the recording surface. Moreover, a reproduced signal and a focusing error signal are obtained from the photodetecting section on which the O-order beam is incident.

Next, an example of the laser element 1 will be described with reference to Figure 4. The laser element 1 is normally mounted on a heat sink 8 made of copper which serves as one electrode. From the upper layer to the lower layer in the drawing, the laser element 1 comprises an electrode layer 1a an n-GaAs layer (substrate layer) 1b, an n-Ga$_{1-y}$Al$_y$As layer (cladding layer) 1c, a Ga$_{1-x}$Al$_x$As layer (active layer) 1d, a p-Ga$_{1-y}$Al$_y$As layer (cladding layer) 1e, and a p-GaAs layer 1f. The laser beam L is emitted from the active layer 1d. If the laser beam emission end face (cleavage face) 1A of the laser element 1 is taken as a front face, the width of the laser element 1 is from 100 to 300 μm, the height (thickness) is from 80 to 100 μm, and the depth is from 200 to 300 μm. The height of the active layer 1d from the upper surface of the heat sink 8 is several μm.

If the tangential skew angle of the beam $L_0$ relative to the recording surface is changed, the tracking error signal is changed cyclically in response thereto, so that the tracking error cannot be accurately detected.

We have studied this and found that the beams $L_0$, $L_{+1}$ and $L_{-1}$ reflected on the optical recording medium 6 not only pass through the lens 5 and are reflected on the reflection surface 4a of the beam splitter 4, but also pass through the beam splitter 4 and into the grating 3, from which corresponding O-order and $\pm$ first-order beams are respectively generated and pass through the lens 2 to the laser element 1. The amount of light directed to the laser element 1 is large when a non-polarizing beam splitter is employed, and small when a polarizing beam splitter is employed. As shown in Figure 5, depending on the relative rotational angle between the end face 1A of the laser element 1 and the grating 3, the locations of a central beam La and side beams Lb and Lc on respective sides thereof, each entering the laser element 1, are changed as follows: the central beam La is positioned at the active layer 1d on the end face 1A and the side beams Lb and Lc are positioned up and down on a straight line perpendicular to the active layer 1d passing through the position of the central beam La; the central beams La and both side beams Lb and Lc are all positioned on the active layer 1d; and the straight line connecting the central beam La and the side beams Lb and Lc is at an arbitrary angular position between the above two cases. The beams La, Lb and Lc are such that the beams $L_0$, $L_{+1}$ and $L_{-1}$ in Figure 3 are diffracted agkin by the grating 3, and then mixed in the superimposed state.

When at least one of the side beams Lb and Lc is made incident on the surface of the heat sink 8, which surface is coarse, the incident beam is reflected irregularly, thus causing no trouble. However, when at least one of the side beams Lb and Lc is incident on the end face 1A of the laser element 1, which has good reflectivity (for example 10%) the incident beam is reflected, travels through the optical path and is incidefit on the photodetector 7. Thus, the incident beam causes an interference with the beam $L_{+1}$ or $L_{-1}$. Consequently, in response to the tangential skew angle of the O-order beam $L_0$ relative to the recording surface, the intensity of the beam $L_{+1}$ or $L_{-1}$ which is incident on the photodetector 7 is changed, and the tracking error signal changes cyclically in accordance with the skew angle.

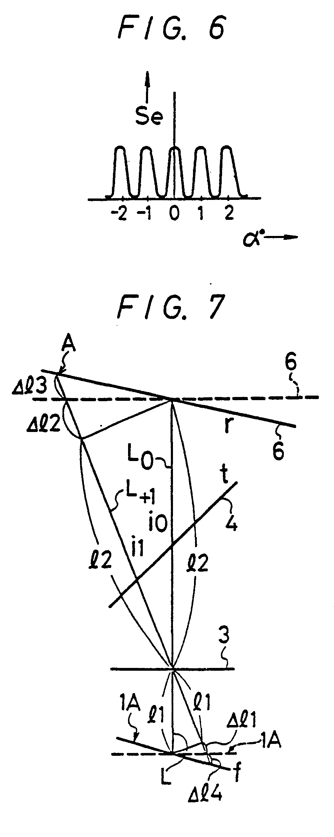

Figure 6 shows the cyclical property of the level change of the tracking error signal Se in response to the tangential skew angle α° of the beam $L_0$ relative to the recording surface when one beam Lb of the side beams Lb and Lc enters the end face 1A of the laser element 1, while the other beam Lc is incident on the heat sink 8. In practice, as $|\alpha|$ increases, the level of the tracking error signal Se is attenuated. When both side beams Lb and Lc are incident on the end face 1A, the amplitude of the waveform corresponding to Figure 6 becomes twice that in Figure 6, and the phase thereof becomes different from that in Figure 6.

Next, with reference to Figure 7 (in which the lens system is not shown), an explanation will be given of interference arising where one beam Lb of the side beams Lb and Lc enters the end face 1A of the laser element 1, while the other beam Lc is incident on the heat sink 8. A solid line 1A designates the end face 1A which is generally skewed relative to a broken line end face 1A placed at the normal position. A solid line recording medium 6 is inclined relative to a broken line recording medium 6 that is placed at the normal position. The beam $L_0$ is perpendicular to the end face 1A placed at the normal position and the recording surface placed at the normal position. $\theta$ is an angle of the beam $L_{+1}$ relative to the beam $L_0$. $l_1$ designates an optical length between the end face 1A and the grating 3, and $l_2$ an optical path length between the grating 3 and the recording surface. $\Delta l_1$ and $\Delta l_2$ designate optical path differences of the beam $L_0$ and the bea $L_{+1}$ relative to the optical path lengths $l_1$ and $l_2$, respectively. $\Delta l_3$ and $\Delta l_4$ respectively designate optical path differences brought about by the skew of the optical recording medium 6, and by the skew of the end face 1A. g designates a phase difference between the beam $L_0$ and the beams $L_{+1}$ in the grating 3. $i_0$ and $i_1$ designate transmissivities of the beams $L_0$ and the beam $L_{+1}$ in the grating 3, respectively, t a transmissivity of the half-mirror 4, and r and f reflectivities of the recording surface and on the end face 1A, respectively.

Consider the complex amplitude of light at a point A on the recording surface at which the beam $L_{+1}$ is incident, in the following four cases:

(1) $a_1$: the beam $L_{+1}$ is directly introduced at the point A.

(2) $a_2$: the O-order beam, which is obtained by such a manner that the O-order beam $L_0$ is reflected on the optical recording medium 6 and introduced again to the grating 3, is reflected on the end face 1A and introduced again to the grating 3, and thereby produced as a + first-order beam. This final beam is incident at the point A.

(3) $a_3$: the + first-order beam $L_{+1}$, which is provided such that the O-order beam $L_0$ is reflected on the optical recording medium 6 and again introduced into the grating 3, is reflected on the end face 1A and again introduced into the grating 3, and thereby produced as a O-order beam. This last beam is made incident at the point A.

(4) $a_4$: the O-order beam, which is provided such that the + first-order beam $L_{+1}$ is reflected on the optical recording medium 6 and then again enters the grating 3, is reflected on the end face 1A and again enters the grating 3 and is thereby produced as the O-order beam. This last beam is made incident at the point A. Next, $a_1$ to $a_4$ are expressed by the following equations:

$$a_1 = i_1 \, t \cdot \exp\{j \, (l_1 + g + l_2 + \Delta l_2) + \Delta l_3)\} \tag{1}$$

$$a_2 = i_0^2 \, i_1 \, t^3 \, rf \cdot \exp[j \, \{3 \, (l_1 + l_2) + g + \Delta l_2 + \Delta l_3\}] \tag{2}$$

$$a_3 = i_0^2 \, i_1 \, t^3 \, rf \cdot \exp[j \, \{3 \, (l_1 + l_2) + g + 2\Delta l_1 + \Delta l_2 + \Delta l_3 + 2\Delta l_4\}] \tag{3}$$

$$a_4 = i_0^2 \, i_1 \, t^3 \, rf \cdot \exp[j \, \{3 \, (l_1 + l_2) + g + 3 \, (\Delta l_2 + \Delta l_3) + 2\Delta l_1 + 2\Delta l_4\}] \tag{4}$$

To simplify the calculation, if the coherence length of the laser beams is given as less than $2(l_1 + l_2)$, the intensity $I_A$ of light at the point A is expressed by the following equation:

$$I_A = |a_i|^2 + |a_2 + a_3 + a_4|^2 = i_2 \, t^2 \, [1 +$$

$$i_0^4 \, t^4 \, r^2 \, f^2 \, \{3 + 2\cos 2 \, (\Delta l_1 + \Delta l_4) + 2\cos$$

$$2 \, (\Delta l_1 + \Delta l_4 + \Delta l_2 + \Delta l_3) + 2\cos 2 \, (\Delta l_2 + \Delta l_3)\}] \tag{5}$$

Moreover, when both the side beams Lb and Lc are incident on the end face 1A, if the beam $L_{+1}$ is made incident at the point A on the recording surface, while the beam $L_{-1}$ is made incident at a point B that is symmetrical with respect to the beam $L_0$, the light intensity $I_A$ at the point A is expressed exactly the same as in Equation (5), while the light intensity $I_B$ at the point B is expressed by the following equation:

$$I_B = i_1^2 \, t^2 \, [1 + i_0^4 \, t^4 \, r^2 \, f^2 \, \{3 + 2\cos 2 \, (\Delta l_1$$

$$-\Delta l_4) + 2\cos 2 \, (\Delta l_1 - \Delta l_4 + \Delta l_2 - \Delta l_3)$$

$$+2\cos 2 \, (\Delta l_2 - \Delta l_3)\}] \tag{6}$$

The present invention is concerned with producing a tracking error signal that is not changed with change of the tangential skew angle of the O-order beam of the optical head relative to the optical recording medium.

According to the present invention there is provided an optical head tracking error detecting apparatus comprising:

a semiconductor laser element;

a diffraction grating on which a laser beam from said laser element is incident;

a beam splitter passing therethrough a O-order beam and ± first-order beams emitted from said diffraction grating;

an objective lens for converging the O-order beam and the ± first-order beams from said beam splitter and causing them to be incident on an optical recording medium; and

a photodetector on which the O-order beam and ± first-order beams reflected on said optical recording medium, pass through said objective lens and then reflected on a reflection surface of said beam splitter are incident;

wherein a pair of photodetection outputs corresponding to said ± first-order beams are obtained from said photodetector, and on the basis of the difference between said pair of photodetection outputs, there is generated a tracking error signal corresponding to the tracking state of said O-order beam on said optical recording medium; characterized by:

a pair of positive lenses provided between said laser element and said diffraction grating; and

a light shielding member provided between said pair of positive lenses so that, of a central beam and two side beams reflected from said optical recording medium, said central beam is passed through said objective lens, said beam splitter, and said diffraction grating, and is directed to said laser element, but both said side beams are shielded.

The invention will be described by way of example with reference to the accompanying drawings, throughout which like parts are referred to by like references, and in which:

Figures 1A, 1B and 2 are diagrams of an embodiment of optical head tracking error detecting apparatus according to the present invention and a waveform diagram for the explanation thereof;

Figure 3 is a diagram of a previously-proposed apparatus;

Figures 4 and 5 are views of a semiconductor laser element;

Figure 6 is a waveform diagram; and

Figure 7 is a diagram for explaining interference.

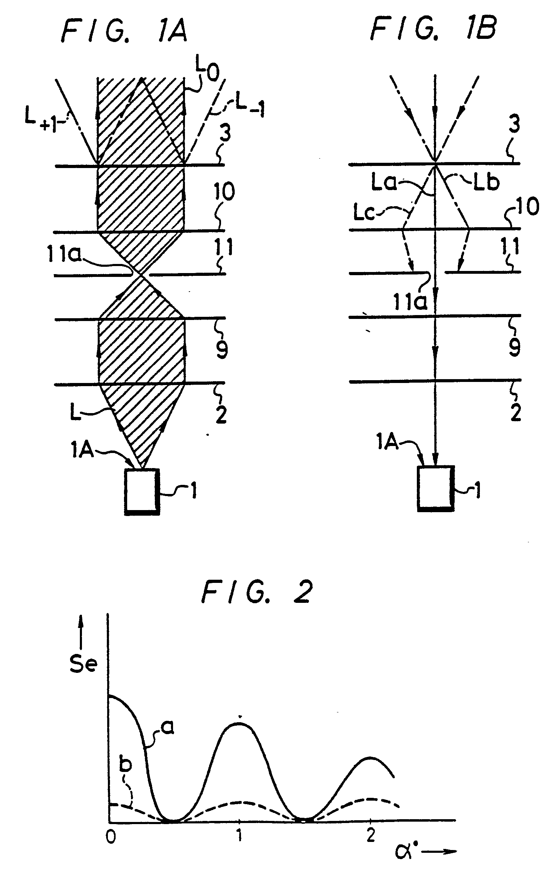

In Figures 1A and 1B, a pair of positive lenses (convex lenses) 9 and 10 is provided between the collimator lens 2 and the diffraction grating 3, and a light shielding plate (light shielding member) 11 is located between the lenses 9 and 10 to pass therethrough the central beam La of the central beam 1a and the side beams Lb and Lc which are all reflected on the optical recording medium 6, passed through the objective lens 5, the beam splitter 4, and the grating 3 and are then directed to the semiconductor laser element 1, but to shield both side beams Lb and Lc.

The lenses 9 and 10 should each have small aberration, a large effective aperture and a long focal length. For example, the focal length is 17 mm and the NA is 0.14. A central aperture 11a of the light shielding plate 11 is 60 µm in diameter (or width) and 10 µm in thickness. The wavelength of the laser beam L is 830 nm. The spacing between the beams is 75 µm, and the beam spot size on the recording medium 6 is 7 µm.

Then, as shown in Figure 1A, the diverging laser beam from the laser element 1 is collimated by the lens 2 to form a parallel beam and enters the lens 9 by which it is converged. The converged beam then enters the lens 10 by which it is collimated again to form a parallel beam, and then enters the grating 3. The light shielding plate 11 is located near the converging point of the converged beam that is passed through the lens 9. A central aperture (slit) 11a of the light shielding plate 11 is used to pass therethrough only the central beam La. The other elements are similar to those in Figures 3 to 7.

Consequently, as shown in Figure 1B, of the central beam La and the side beams Lb and Lc which are all reflected on the recording medium 6, passed through the lens 5, the beam splitter 4 and the grating 3, and directed to the laser element 1, the central beam La passes through the central aperture 11a of the light shielding plate 11, but both the side beams Lb and Lc are shielded by the shielding plate 11. The light shielding plate 11 has a light absorbing or light diffusing reflection property on the surface facing the grating 3.

In Figure 2, curves a and b indicate respectively the level changing characteristics of the tracking error signal Se relative to the tangential skew angle α° corresponding to that in Figure 6 when the lenses 9 and 10 and the light shielding plate 11 are not provided, and when they are provided. The curve b is very small compared with the curve a in amplitude.

Thus, even when the light beams reflected on the optical recording medium 6 are directed through the lens 5, the beam splitter 4 and the grating 3 to the laser element 1, there is no risk of the beams being reflected on the end face 1A thereof. Therefore, it is possible to obtain a tracking error signal which does not change with change of the tangential skew angle of the O-order beam of the optical head OH relative to the optical recording medium 6.

## Claim

An optical head tracking error detecting apparatus comprising:

a semiconductor laser element (1);

a diffraction grating (3) on which a laser beam (L) from said laser element (1) is incident;

a beam splitter (4) passing therethrough a O-order beam and ± first-order beams emitted from said diffraction grating (3);

an objective lens (5) for converging the O-order beam and the ± first-order beams from said beam splitter (4) and causing them to be incident on an optical recording medium (6); and

a photodetector (7) on which the O-order beam and + first-order beams reflected on said optical recording medium (6), passed through said objective lens and then reflected on a reflection surface of said beam splitter (4) are incident;

wherein a pair of photodetection outputs corresponding to said ± first-order beams are obtained from said photodetector (7), and on the basis of the difference between said pair of photodetection outputs, there is generated a tracking error signal corresponding to the tracking state of said O-order beam on said optical recording medium (6); characterized by:

a pair of positive lenses (9, 10) provided between said laser element (1) and said diffraction grating (3); and

a light shielding member (11) provided between said pair of positive lenses (9, 10) so that, of a central beam and two side beams reflected from said optical recording medium (6), said central beam is passed through said objective lens (5), said beam splitter (4), and said diffraction grating (3), and is directed to said laser element (1), but both said side beams are shielded.

**Patentanspruch**

Vorrichtung zur Erfassung von Spurfehlern eines optischen Kopfes
mit einem Halbleiter-Laserelement (1),
mit einem Beugungsgitter (3), auf das von dem Laserelement (1) ein Laserstrahl (L) auftrifft,
mit einem Strahlenteiler (4), durch den ein von dem Beugungsgitter (3) ausgehender Strahl nullter Ordnung sowie Strahlen ± erster Ordnung hindurchtreten,
mit einem Objektiv (5), das den Strahl nullter Ordnung und die Strahlen ± erster Ordnung, die von dem Strahlenteiler (4) kommen, konvergiert und auf ein optisches Aufzeichnungs-medium (6) auftreffen läßt,
sowie mit einem Photodetektor (7), auf den der Strahl nullter Ordnung und die Strahlen ± erster Ordnung, die von dem optischen Aufzeichnungsmedium (6) reflektiert werden, nach Durchgang durch das Objektiv (5) und Reflektion an einer reflektierenden Fläche des Strahlenteilers (4) auftreffen,
wobei der Photodetektor (7) zwei Photodetektorausgangssignale liefert, die den Strahlen ± erster Ordnung entsprechen, und auf der Basis der Differenz zwischen diesen beiden Photodetektorausgangssignalen ein Spurfehlersignal erzeugt wird, das dem Spurzustand des Strahls nullter Ordnung auf dem optischen Aufzeichnungsmedium (6) entspricht, gekennzeichnet durch
ein Paar Sammellinsen (9, 10), die zwischen dem Laserelement (1) und dem Beugungsgitter (3) angeordnet sind,
sowie ein Lichtabschirmungselement (11), das derart zwischen dem Sammellinsenpaar (9, 10) angeordnet ist, daß von einem zentral Strahl und zwei Seitenstrahlen, die von dem optischen Aufzeichnungsmedium (6) reflektiert werden, der zentral Strahl durch das Objektiv (5), den Strahlenteiler (4) und das Beugungsgitter (3) geleitet und auf das Laserelement (1) gerichtet wird, die beiden Seitenstrahlen jedoch abgeschirmt werden.

**Revendication**

Dispositif de détection d'erreurs de suivi de piste d'une tête optique, comprenant:
un élément laser (1) à semi-conducteur;
un réseau de diffraction (3) sur lequel tombe un faisceau laser (L) émis par cet élément laser (1);
un séparateur de faisceau (4) laissant passer à travers lui un faisceau d'ordre 0 et des faisceaux de premier ordre ± émis par le réseau de diffracton (3);
une lentille d'objectif (5) pour concentrer le faisceau d'ordre 0 et les faisceaux de premier ordre ± venant du séparateur de faisceau (4) et pour les faire tomber sur un milieu d'enregistrement optique (6); et
un photodétecteur (7), sur lequel tombent le faisceau d'ordre 0 et les faisceau de premier ordre ± réfléchis par le milieu d'enregistrement optique (6), envoyés à travers la lentille d'objectif puis déviés par une surface réfléchissante du séparateur de faisceau (4);
dans lequel deux signaux de sortie de photodétection, correspondant aux faisceaux de premier ordre ±, sont obtenus du photodétecteur (7) et, sur la base de la différence entre ces deux signaux de sortie de photodétection, un signal d'erreur de suivi de piste est généré qui correspond à l'état de suivi de piste du faisceau d'ordre 0 sur le milieu d'enregistrement optique (6); caractérisé par:
deux lentilles convexes (9, 10) prévues entre l'élément laser (1) et le réseau de diffraction (3); et
un diaphragme (11) prévu entre les deux lentilles convexes (9, 10), de sorte que lorsqu'un faisceau central et deux faisceaux latéraux sont réfléchis par le milieu d'enregistrement optique (6), le faisceau central passe à travers la lentille d'objectif (5), le séparateur de faisceau (4) et le réseau de diffraction (3) pour être dirigé sur l'élément laser (1), mais les deux faisceaux latéraux sont empêches de passer.

EP 0 188 624 B1

F I G. 1A

F I G. 1B

F I G. 2

*FIG. 4*

*FIG. 3*

*FIG. 5*

2

## F I G. 6

## F I G. 7